Europäisches Patentamt

**European Patent Office**

Office européen des brevets

(11) Veröffentlichungsnummer: **0 012 416**
**B1**

(19)

(12) **EUROPÄISCHE PATENTSCHRIFT**

(45) Veröffentlichungstag der Patentschrift:
16.06.82

(51) Int. Cl.³: **C 08 L 75/04** // (C08L75/04, 51/04)

(21) Anmeldenummer: 79105048.7

(22) Anmeldetag: 10.12.79

(54) Thermoplastische Zusammensetzungen aus Polyurethanen und Kautschukpfropfpolymeren.

(30) Priorität: 16.12.78 DE 2854407

(43) Veröffentlichungstag der Anmeldung:
25.06.80 Patentblatt 80/13

(45) Bekanntmachung des Hinweises auf die Patenterteilung:
16.06.82 Patentblatt 82/24

(84) Benannte Vertragsstaaten:
AT BE CH DE FR GB IT NL

(56) Entgegenhaltungen:
DE-A-1 570 073
DE-A-1 913 683
DE-B1-2 355 942

(73) Patentinhaber: BAYER AG, Zentralbereich Patente, Marken und Lizenzen, D-5090 Leverkusen 1, Bayerwerk (DE)

(72) Erfinder: Goyert, Wilhelm, Dr., Wolfskaul 10, D-5000 Köln 80 (DE)
Erfinder: Awater, Albert, Dr., Zum Hahnenberg 54, D-5068 Odenthal (DE)
Erfinder: Grimm, Wolfgang, In Holzhausen 81, D-5090 Leverkusen 3 (DE)
Erfinder: Ott, Karl-Heinz, Dr., Paul-Kleestrasse 54, D-5090 Leverkusen (DE)
Erfinder: Oberkirch, Wolfgang, Dr., Gerstenkamp 14, D-5000 Köln 80 (DE)
Erfinder: Wagner, Hans, Dr., Tizianstrasse 13, D-4047 Dormagen 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Thermoplastische Zusammensetzungen aus Polyurethanen und Kautschukpfropfpolymeren.

Die Erfindung betrifft thermoplastisch verarbeitbare Mischungen («Blends») aus thermoplastischen Polyurethanen («TPU») und speziellen Kautschukpfropfpolymerisaten sowie ein Verfahren zur Herstellung dieser Blends.

Es ist bekannt, dass Polyurethane («PUR») mit Pfropf-Copolymerisaten aus Acrylnitril, Styrol und Butadien («ABS»-Polymeren) vermischt («geblendet») werden können. Eine entsprechende technische Lehre wird z.B. in US-PS 3 049 505 gegeben. Gemäss diesem Stand der Technik wird ein ABS-Polymerisat eingesetzt, welches durch Pfropfung von 40–80 Gew.-% der «Pfropfmonomeren» Styrol und Acrylnitril auf 20–60 Gew.-% der als «Pfropfgrundlage» dienenden Elastomerkomponente Polybutadien hergestellt wurde. Bei dem in den Ausführungsbeispielen von US-PS 3 049 505 verwendeten ABS-Polymeren beträgt das Gewichtsverhältnis zwischen Pfropfmonomeren und Pfropfgrundlage 70 : 30. Die TPU/ABS-Blends gemäss US-PS 3 049 505 sind selbst Thermoplasten. Grössere Formkörper aus diesen Blends sind nicht stapelbar, ohne sich zu verziehen. Die Kälteschlageigenschaften der Produkte sind mässig und auch ihre Abriebbeständigkeit ist schlecht.

In der DE-OS 2 014 385 wird die Umsetzung von gegenüber Isocyanaten reaktive Gruppen aufweisenden Copolymerisatlatices auf Basis von z.B. Butadien, Styrol, Methacrylaten, Acrylnitril usw. sowie Comonomeren mit reaktiven Wasserstoffatomen mit Polyisocyanaten beschrieben. In den so erhaltenen Formkörpern stellt der Latex die durchgehende Matrix dar. Die Produkte sind keine Thermoplasten. Im Gegensatz zu diesen Materialien weisen die nachfolgend beschriebenen erfindungsgemässen Kunststoffe weit höhere Festigkeiten und Steifigkeiten auf.

Gegenstand der DE-Offenlegungsschriften 2 627 073 und 2 627 074 sind Dispersionen von Polyurethanharnstoffen in höhermolekularen Polyolen, welche auch Polymerisatlatices enthalten können. Diese füllstoffhaltigen Polyole werden als Ausgangsmaterial zur Herstellung von PUR-Schaumstoffen eingesetzt. Die in den Beispielen beschriebenen Schaumstoffe lassen sich nicht thermoplastisch verformen. Ähnliches gilt auch für die US-PS 2 993 013.

Die DE-AS 2 355 942 betrifft Klebstoffbindemittel auf Basis von Gemischen aus Polyurethan, Styrol-Copolymerisaten und gegebenenfalls ABS-Polymeren. Voraussetzung für die Klebwirkung ist die Anwesenheit der Styrolcopolymerisate und die Löslichkeit der Pulyurethane in Lösemitteln. Im Gegensatz zu den in den erfindungsgemässen Werkstoffen enthaltenen Pfropfpolymerisaten enthält die Polymerisatkomponente der Gemische gemäss DE-AS 2 355 942 daher mindestens etwa 60 Gew.-% an den Monomeren Styrol, α-Methylstyrol und Acrylnitril. Ein Hinweis auf eine thermoplastische Verarbeitbarkeit der Polymermischungen findet sich in DE-AS 2 355 942 nicht; wie Versuche zeigten, ist die Schlagzähigkeit der Polymermischungen in der Kälte schlecht und ihre Abriebbeständigkeit niedrig.

In der DE-OS 2 128 199 wird ein Verfahren zur Herstellung von Mischungen aus PUR-Thermoplasten und anderen thermoplastischen Polymerisaten beschrieben. Diese Mischpolymerisate sind jedoch nicht schlagzäh bzw. weisen niedrige mechanische Festigkeiten, insbesondere geringe Abriebbeständigkeiten auf.

Die Stapelfähigkeit von spritzfrischen Formkörpern aus Produkten des bisherigen Standes der Technik ist unzureichend; ausserdem weisen die bekannten Polymer-Blends eine schlechte Wärmestandfestigkeit auf.

Es wurde nun überraschend gefunden, dass durch Kombination von TPU mit wenigen Prozenten eines Pfropfkautschuks (der als solcher kein Thermoplast ist) bestimmter Zusammensetzung thermoplastische Werkstoffe erhalten werden, die sich hinsichtlich Kälteschlagfestigkeit, Abrieb- und Kratzbeständigkeit besonders günstig verhalten. Die Stapelfähigkeit komplizierter Spritzkörper ist deutlich verbessert und auch die Wärmestandfestigkeit ist erhöht.

Gegenstand der Erfindung sind thermoplastisch verarbeitbare Gemische aus Polyurethan und Pfropfpoylmeren, bestehend aus

A) 75–97 Gew.-% eines thermoplastischen Polyurethans und

B) 25–3 Gew.-% eines Pfropfpolymerisats ungesättigter Monomerer auf eine kautschukelastische Elastomerkomponente,

dadurch gekennzeichnet, dass Komponente A) ein thermoplastisches lineares Polyurethan mit einer Shore-D-Härte > 50, aus Polyolen mit Molekulargewichten zwischen 800 und 6000, Diisocyanaten und niedermolekularen Polyalkoholen als Kettenverlängerungsmittel, in einem Molverhältnis von Kettenverlängerungsmittel zu langkettigem Polyol von > 4 : 1 und einem NCO/OH-Verhältnis von 0,95–1,10, und

Komponente B) ein Pfropf-Copolymerisat von a) 12,5–25 Gew.-% eines oder mehrerer Pfropfmonomerer auf

b) 75–87,5 Gew.-% einer Elastomerkomponente mit einer Einfriertemperatur < −50 °C aus der Gruppe von 1,3-Dien- und Acrylat-Kautschuken ist, wobei die gesamte Komponente B) < 30 Gew.-% an den Monomeren Styrol, α-Methylstyrol und Acrylnitril enthält.

Bevorzugt sind Gemische, dadurch gekennzeichnet, dass sie aus 88–96 Gew.-% der Komponente A) und 12–4 Gew.-% der Komponente B) bestehen.

Gegenstand der Erfindung ist auch ein Verfahren zur Herstellung thermoplastisch verarbeitbarer Gemische, dadurch gekennzeichnet, dass die Komponenten A) und B), sowie gegebenenfalls Stabilisatoren und Vernetzungsmittel, koextrudiert werden, sowie ein Verfahren dadurch gekennzeichnet, dass die thermoplastisch verarbeitbaren Gemische durch Polyaddition von Polyurethan-bildenden Ausgangsstoffen der Komponente A) in Gegenwart der Komponente B), sowie gegebenenfalls Stabilisatoren und Vernetzungsmitteln in einer zweiwelligen Reaktionsschneckenmaschine aufgebaut werden.

Pfropfprodukte im Sinne der Erfindung werden erhalten, indem man die zu pfropfenden Monomeren in Gegenwart der in einem separaten Polymerisationsschritt hergestellten Elastomerkomponente polymerisiert. Die Herstellung der Pfropfprodukte kann nach den bekannten Polymerisationsverfahren erfolgen; hierzu gehören die Emulsions-, die Suspensions- und die Masse-Polymerisation sowie Kombinationen aus diesen Verfahren, wie sie z.B. in der eingangs diskutierten Literatur oder in US-PS 2 820 773 beschrieben werden.

Erfindungsgemäss bevorzugt ist die Emulsionspolymerisation.

Als Pfropfgrundlage geeignete Elastomerkomponenten sind kautschukartige Polymerisate mit einer Einfriertemperatur $T_G < -30\,°C$ (DIN 53 445), vorzugsweise $< -50\,°C$; bevorzugt sind 1,3-Dien- und Acrylatkautschuke, wie z.B. Butadien- und/oder Isopren-Polymerisate mit bis zu 30 Gew.-% Styrol und/oder Acrylnitril sowie Copolymerisate aus Butadien und Acrylsäurealkylestern. Besonders bevorzugt sind Butadien-Polymerisate mit bis zu 10 Gew.-% Styrol und/oder Acrylnitril.

Werden die Pfropfprodukte nach einem Emulsionspolymerisationsverfahren hergestellt, so sollte die Teilchengrösse der Pfropfgrundlage (gemeint ist der Teilchendurchmesser $d_{50}$, d.h. jener mittlere Durchmesser, unterhalb und oberhalb dessen jeweils 50% der Teilchen liegen), bevorzugt im Bereich von 0,05 bis 0,8 µm liegen. Diese bei der Emulsionspolymerisation eingesetzten Pfropfgrundlagen können vernetzt oder unvernetzt sein; besonders bevorzugt werden Produkte mit einem Gelgehalt $> 30$ Gew.-% (gemessen in Toluol).

Als zu pfropfende Monomere kommen insbesondere Styrol, α-Methylstyrol und Acrylnitril in Betracht. Für besondere Effekte können diese Monomeren jedoch ganz oder teilweise durch Methacrylnitril, Alkylester der Acrylsäure, Alkylester der Methacrylsäure oder durch Halogenderivate des Styrols und des α-Methylstyrols ersetzt werden. Bevorzugt werden Gemische von Styrol und Acrylnitril im Gewichtsverhältnis von 9 : 1 bis 1 : 1 als Pfropfmonomere eingesetzt.

Das Gewichtsverhältnis von Pfropfgrundlage zu Pfropfmonomeren liegt zwischen 65 : 35 und 95 : 5; bevorzugt sind Gewichtsverhältnisse zwischen 75 : 25 und 87,5 : 12,5.

Als (Meth)acrylsäureester kommen erfindungsgemäss vorzugsweise solche mit 4 bis 10, insbesondere 4 bis 6 C-Atomen in der Akoholkomponente in Betracht. Dies gilt sowohl für die Pfropfgrundlage als auch die Pfropfmonomeren.

Es ist selbstverständlich auch möglich, Mischungen mehrerer Pfropfprodukte einzusetzen, wobei jedes Pfropfprodukt für sich die genannten Bedingungen erfüllen soll.

Die thermoplastischen Polyurethane (Komponente A) entsprechen dem Stand der Technik. Sie sind im wesentlichen aus langkettigen Polyolen vom Molekulargewicht 400–10 000, Poly-(bevorzugt Di)-isocyanaten und Kettenverlängerungsmitteln (bevorzugt kurzkettigen Polyolen vom Molekulargewicht bis 380) aufgebaut, wobei das Äquivalent-Verhältnis von Isocyanaten zu zerewitinoffaktiven H-Atomen (hier NCO/OH-Verhältnis genannt) vorzugsweise zwischen 0,95 und 1,10, besonders bevorzugt zwischen 0,98 und 1,08, liegt.

Als im wesentlichen lineare Polyole mit Molekulargewichten zwischen 400 und 10 000, bevorzugt zwischen 800 und 6000, kommen erfindungsgemäss praktisch alle an sich bekannten, vorzugsweise 2, gegebenenfalls – in untergeordneten Mengen – auch 3, zerewitinoffaktive Gruppen (im wesentlichen Hydroxylgruppen) enthaltenden Polyester, Polylactone, Polyäther, Polythioäther, Polyesteramide, Polycarbonate, Polyacetale, Vinylpolymere wie z.B. Polybutadiendiole, bereits Urethan- oder Harnstoffgruppen enthaltende Polyhydroxylverbindungen, gegebenenfalls modifizierte natürliche Polyole, sowie auch andere zerewitinoffaktive Gruppen wie Amino-, Carboxyl- oder Thiolgruppen enthaltende Verbindungen in Betracht. Diese Verbindungen entsprechen dem Stand der Technik und werden z.B. in den DE-Offenlegungsschriften 2 302 564, 2 423 764 und 2 549 372 (US-Patent 3 963 679) und 2 402 840 (US-Patent 3 984 607) sowie der DE-AS 2 457 387 (US-Patent 4 035 213) eingehend beschrieben. Erfindungsgemäss bevorzugt sind hydroxylgruppenhaltige Polyester aus Glykolen und Adipinsäure, Phthal- und/oder Terephthalsäure sowie deren Hydrierungsprodukte, Hydroxylpolycarbonate, Polycaprolactone, Polyäthylenoxid, Polypropylenoxid, Polytetrahydrofuran und Mischpolyäther aus Äthylenoxid und Propylenoxid. Besonders bevorzugt sind Polyester aus Glykolen und Adipinsäure und Polycaprolactondiole.

Erfindungsgemäss zu verwendende Diisocyanate sind die an sich bekannten aliphatischen, cycloaliphatischen, aromatischen, araliphatischen und heterocyclischen Diisocyanate des Standes der Technik, wie sie z.B. in den bereits genannten DE-Offenlegungsschriften 2 302 564, 2 423 764, 2 549 372, 2 402 840 und 2 457 387 beschrieben sind. Erfindungsgemäss bevorzugte Diisocyanate sind gegebenenfalls durch Methylgruppen substituiertes Hexamethylen-diisocyanat, Isophoron-diisocyanat, Diphenylmethandiisocyanat und Naphthylen-1,5-diisocyanat.

Die genannten Diisocyanate können gegebenenfalls zusammen mit bis zu ca. 15 Mol-% (bezogen auf Diisocyanat) eines höherfunktionellen Polyisocyanats eingesetzt werden; die Menge des höherfunktionellen Polyisocyanats muss jedoch so begrenzt werden, dass ein noch schmelzbares bzw. thermoplastisches Produkt erhalten wird. Eine grössere Menge an höherfunktionellen Isocyanaten muss im allgemeinen durch die Mitverwendung von im Durchschnitt weniger als difunktionellen Hydroxyl- bzw. Aminoverbindungen (bzw. auch von Monoisocyanaten) ausgeglichen werden, so dass eine zu weit gehende chemische Vernetzung des Produktes vermieden wird. Beispiele für höherfunktionelle Isocyanate und monofunktionelle Verbindungen sind ebenfalls dem oben zitierten Stand der Technik zu entnehmen. Beispielsweise seien Monoamine wie Butyl- und Dibutylamin, Octylamin, Stearylamin, N-Methylstearylamin, Pyrrolidin, Piperidin und Cyclohexylamin sowie Monoalkohole wie Butanol, 1-Äthylhexanol, Octanol, Dodecanol, Amylalkohole, Cyclohexanol und Äthylenglykolmonomethyläther erwähnt.

Auch die erfindungsgemäss einzusetzenden Kettenverlängerungsmittel sind an sich bekannt und z.B. in den DE-Offenlegungsschriften 2 302 564, 2 423 764, 2 549 372, 2 402 799, 2 402 840 und 2 457 387 beschrieben. Es sind dies niedermolekulare Polyalkohole (vorzugsweise Glykole), Polyamine, Hydrazine und Hydrazide. Auch Aminoalkohole wie Äthanolamin, Diäthanolamin, N-Methyldiäthanolamin, Triäthanolamin und 3-Aminopropanol kommen erfindungsgemäss in Frage. Bevorzugte Kettenverlängerungsmittel sind Äthylenglykol, Di- und Triäthylenglykol, 1,4-Butandiol, 1,6-Hexandiol und Hydrochinondi-$\beta$-hydroxyäthyläther. Besonders bevorzugt sind Hydrochinondi-$\beta$-hydroxyäthyläther, Butandiol-1,4 und Hexandiol-1,6.

Bei besonders hartem TPU ($> 50$ Shore D, bevorzugt $> 60$ Shore D) wird ohne den erfindungsgemässen Zusatz von Pfropfkautschuken eine starke Sprödigkeit bei tiefen Temperaturen festgestellt (geringe Kerbschlagzähigkeit). Hier wird durch den Zusatz der Pfropfkautschuke eine wesentliche Verbesserung erreicht. Derartig harte TPU werden erhalten, wenn das Molverhältnis von Kettenverlängerer zu langkettigem Polyol $> 4 : 1$, bevorzugt $> 6 : 1$ ist. Den Polyurethankomponenten können selbstverständlich die üblichen Hydrolyse- und Oxidationsstabilisatoren entsprechend dem Stand der Technik zugesetzt werden.

Es empfiehlt sich auch, zusätzlich zur Stabilisierung des Pfropfkautschuks Antioxidantien wie 2,6-Di-tert.-butyl-4-methylphenol, andere sterisch gehinderte Phenole oder andere übliche Antioxidantien einzeln oder in Mischung in einer Menge von etwa 0,1 bis 1,5 Gew.-%, bezogen auf Gesamtblend, zuzugeben. Diese Zusätze können entweder in den Pfropfkautschuk oder in die Polyolkomponente des Polyurethans eingebracht werden.

Bei Verwendung von Polyester- (weniger vorteilhaft bei 1,2-Polypropylenglykoläther) -urethanen können zwecks nachträglicher Vernetzung Peroxide wie z.B. Dicumylperoxid, Cumyl-tert.-butylperoxid und $\alpha,\alpha'$-Di-(tert.-butyl-peroxi)-diisopropylbenzol in einer Menge bis zu 3 Gew.-%, bezogen auf eingesetzten Pfropfkautschuk, mitzugegeben werden.

Die Herstellung der erfindungsgemässen thermoplastischen Werkstoffe kann z.B. so erfolgen, dass man die beiden Komponenten A) und B) gemäss Stand der Technik getrennt herstellt und dann – gegebenenfalls unter Mitverwendung der erwähnten Zusatzmittel – trocken vermischt («dryblending». Für das dry-blending eignen sich z.B. die üblichen Innenmischer und Extruder.

Erfindungsgemäss bevorzugt ist es jedoch, die Umsetzung der polyurethanbildenden Komponenten bereits in Gegenwart des Pfropfkautschuks und gegebenenfalls der obengenannten Zusatzmittel ablaufen zu lassen. Besonders vorteilhaft ist es, für diesen Zweck eine Reaktionsschneckenmaschine einzusetzen, wie sie z.B. in US-PS 3 233 025, 3 624 964, DE-OS 2 447 368, DE-AS 2 610 980 und insbesondere DE-AS 2 302 564 und 2 549 372 (US-PS 3 963 679 beschrieben werden. Die polyurethanbildenden Komponenten werden dabei (entweder bereits vorvermischt oder auch getrennt) an einer oder mehreren Stellen, gegebenenfalls auch in mehrere Portionen gesplittet, in die Schneckenmaschine eingebracht und der Pfropfkautschuk an einer beliebigen Stelle der Schnecke zudosiert. Es kann dabei oft vorteilhaft sein, den Pfropfkautschuk in der Schnecke vorzulegen, auf- bzw. anzuschmelzen und dann erst über weitere Einspeisstellen die polyurethanbildenden Komponenten zuzudosieren. In diesem Falle kann auf die speziellen Knetelemente verzichtet werden, wie sie für das Verfahren der US-PS 3 963 679 erforderlich sind.

Die erfindungsgemässen Werkstoffe werden insbesondere dort eingesetzt, wo eine starke Schlagbeanspruchung bei tiefen Temperaturen auftreten kann, z.B. in der Fahrzeugindustrie für Karosserieteile oder für Skischuhschalen. Auch grosse Formteile verziehen sich bei der Lagerung praktisch nicht und gewinnen relativ schnell ihre Endfestigkeiten.

Die neuen Polymergemische können auch extrudiert, kalandriert und nach den übrigen üblichen Verfahren der Thermoplastenverarbeitung umgeformt werden.

Die Polyurethanreaktion wird in den Beispielen auf einer Zweiwellenschneckenknetmaschine durchgeführt. Geeignete Schneckenmaschinen werden z.B. in den DE-Patentschriften 813 154, 862 668 und 940 109, der DE-OS 2 302 564 (US-Patent 3 963 679 sowie den US-Patenten 3 233 025 und 3 642 964 beschrieben.

Die Verweilzeiten der Reaktionsschmelze in der Schneckenmaschine betragen in der Regel 0,3–30 Minuten, bevorzugt 0,5 bis 4 Minuten. Die Temperatur des Schneckengehäuses liegt zwischen etwa 60 und 300 °C (ca. 80 bis 280 °C in der Eingangszone ca. 100–300 °C in der Mitte des Extruders und ca. 60 bis 250 °C in der Austragszone). Die aus dem Extruder austretende Schmelze wird nach an sich bekannten Verfahren abgeschreckt und zerkleinert. Die Verfahrensprodukte können auf die übliche Weise thermoplastisch oder in Lösung zu Filmen, Zahnrädern, Kabelummantelungen, Dichtungen usw. verarbeitet werden.

Die folgenden Beispiele erläutern die Erfindung. Wenn nicht anders vermerkt, sind Mengenangaben als Gewichtsteile bzw. Gewichtsprozente zu verstehen. In den Beispielen 1 und 2 wird eine Zweiwellenschneckenknetpresse des Typs ZSK 53 V der Fa. Werner & Pfleiderer, Stuttgart, mit selbstreinigendem Wellenbesatz verwendet. Die Länge des Verfahrensteils entspricht etwa dem 42-fachen Wellendurchmesser. Für alle Beispiele wird der gleiche Wellenbesatz mit einem Knetelementanteil von ca. 20% verwendet. Der Verfahrensteil besteht aus 12 Gehäusen, wobei das erste mit einem Einspeisetrichter für den Thermoplasten versehen ist. Funktion und Wirkungsweise der Schneckenmaschine, von Knet- und Förderelementen des Wellenbesatzes usw. sind in den Firmenschriften von Werner & Pfleiderer bzw. in der DE-OS 2 302 564 (US-PS 3 963 679) ausführlich beschrieben.

Beispiel 1a (Vergleichsversuch) In den Einspeisetrichter werden dosiert:

40,1 Teile eines Adipinsäure/Butandiol-Polyesters (OH-Zahl 56)

0,2 Teile Stearylamid

0,2 Teile 2,6-Di-tert.-butyl-4-methylphenol

0,2 Teile 2,2'-6,6'-Tetraisopropyldiphenylcarbodiimid

14,03 Teile Butandiol-1,4

45,27 Teile 4,4'-Diphenylmethandiisocyanat (NCO/OH-Verhältnis = 1,03)

Die Zuschlagstoffe werden zusammen mit dem Polyester bei 100 °C eindosiert, der Kettenverlängerer bei ca. 25 °C und das Diisocyanat bei 60 °C. An der Schneckenmaschine werden folgende Gehäusetemperaturen eingestellt:

| Gehäuse: | 1 | 3 | 5 | 7 | 9 | 11 | 12 |
|---|---|---|---|---|---|---|---|
| Temp. °C: | 100 | 200 | 220 | 210 | 180 | 180 | 140 |
| Kopftemp.: | 200 °C | | | | | | |

Es wird ein Thermoplast erhalten, der nach 2tägiger Lagerung, Verspritzen und Temperung von 15 Stunden bei 110 °C folgende Eigenschaften aufweist:

| Prüfung | Norm | Masseinheit | Werte |
|---|---|---|---|
| Abriebverlust | DIN 53516 | mm³ | 25 |
| Härte Shore D | DIN 53505 | – | 62 |
| Grenzbiegespannung | DIN 53452 | MPa | 12 |
| Zugfestigkeit | DIN 53504 | MPa | 55 |
| Bruchdehnung | DIN 53504 | % | 400 |
| Kerbschlagzähigkeit bei −30 °C | DIN 53453 | kJ/m² | 3 |
| Erweichungspunkt (TMA) | eigene Prüfnorm | °C | 39 |

Der Erweichungspunkt wurde mit einem thermomechanischen Analysator (TMS-1) der Fa. Perkin-Elmer bestimmt: An plattenförmigen Prüfkörpern mit einer Grösse von 12 × 3 × 2 mm, die an beiden Enden aufliegen, wird bei einer in der Mitte des Plättchens wirkenden Belastung von 0,2 N die Durchbiegung in Abhängigkeit von der Temperatur gemessen. Die Aufheizrate beträgt 2,5 °C/Min. ab 20 °C. Es wird die Temperatur ermittelt, bei welcher ein deutlicher Anstieg der Durchbiegung mit zunehmender Temperatur (Tangentenschnitt) auftritt.

Die hier ermittelten 39 °C weisen auf eine schlechte Wärmestandfestigkeit des reinen TPU hin. Vor allem ist aber die Kerbschlagzähigkeit in der Kälte ungünstig.

Beispiel 1b (Vergleichsversuch)

Pro Zeiteinheit werden 90 Teile des Reaktionsgemisches aus Beispiel 1a, bestehend aus 36,08 Teilen Adipinsäure/Butandiol-Polyester

0,18 Teilen Stearylamid

0,18 Teilen 2,6-Di-tert.-butyl-4-methylphenol

0,18 Teilen 2,2'-6,6'-Tetraisopropyldiphenylcarbodiimid

12,63 Teilen Butandiol-1,4 und

40,74 Teilen 4,4-Diphenylmethandiisocyanat

in Gehäuse 2 und 10 Teile eines Emulsions-ABS-Polymeren mit 15 Gew.-% Butadien, 60 Gew.-% Styrol und 25% Acrylnitril in den Trichter der Schneckenmaschine eingespeist. Diese handelsüblichen ABS-Polymeren sind im wesentlichen aus den Monomeren Acrylnitril (A), Butadien (B) und Styrol bzw. α-Methylstyrol (S) aufgebaut, wobei B teilweise oder ganz durch eine andere Kautschukkomponente ersetzt sein kann, z.B. durch einen EPDM-Kautschuk (sogenannte AES-Polymerisate). Diese Polymerisate werden in an sich bekannter Weise durch Emulsions-, Suspensions-, Masse- und Lösungspolymerisation bzw. Kombination dieser Verfahren hergestellt, wie es z.B. von D.H. Baskedis in «ABS-Plastics», Reinhold Publishing Corporation, New York, 1964, beschrieben wird.

Die Verarbeitungstemperaturen sind dieselben wie bei Beispiel 1a; das ABS-Polymer wird bei ca. 25 °C zugegeben.

Der Thermoplast weist nach Lagerung, Verspritzen und Temperung folgende Eigenschaften auf:

| Prüfung | Norm | Masseinheit | Werte |
|---|---|---|---|
| Abriebbeständigkeit | DIN 53516 | mm³ | 50 |
| Härte Shore D | DIN 53505 | – | 65 |
| Grenzbiegespannung | DIN 53452 | MPa | 16 |

| Prüfung | Norm | Masseinheit | Werte |
|---|---|---|---|
| Zugfestigkeit | DIN 53504 | MPa | 32 |
| Bruchdehnung | DIN 53504 | % | 210 |
| Kerbschlagzähigkeit bei −30°C | DIN 53453 | kJ/m² | 9 |
| Erweichungspunkt (TMA) | eigene Prüfnorm | °C | 37 |

Man erkennt, dass bei Verwendung der handelsüblichen ABS-Polymerisate die Kältekerbschlagzähigkeit des Thermoplasten schlecht und seine Festigkeit sowie der Wärmestand gering sind. Die Kratzempfindlichkeit (z.B. gegenüber Stahlkanten) ist hoch.

Beispiel 1c (erfindungsgemässes Verfahren)

Beispiel 1b wird wiederholt, jedoch unter Verwendung von 10 Teilen des Pfropfkautschuks A anstelle des handelsüblichen ABS-Polymerisats. Der Pfropfkautschuk A wurde folgendermassen hergestellt:

Herstellung der Pfropfgrundlage

In einem druckfesten Rührgefäss wird eine Mischung aus 68 Teilen entsalztem Wasser, 0,5 Teilen des Natriumsalzes der disproportionierten Abietinsäure, 100 Teilen Butadien, 0,4 Teilen n-Dodecylmercaptan und 0,5 Teilen Kaliumperoxidisulfat vorgelegt. Die Reaktion wird zwischen 55 und 75°C geführt (Start – Endtemperatur). Im Laufe der Reaktion werden 1,5 Teile des Natriumsalzes der disproportionierten Abietinsäure nachdosiert. Die Polymerisation wird bis zu einem Umsatz von ca. 98% geführt. Charakterisierung des entstandenen Polybutadienlatex:
Konzentration 58,5%
Gelgehalt in Toluol: >80%

Teilchengrösse $d_{50} = 0,4$ μm
Einfriertemperatur: −80°C (DIN 53 445)

Herstellung eines Pfropfpolymerisates

137 Teile des Pfropfgrundlagenlatex werden in einem Rührgefäss vorgelegt und mit 118 Teilen entsalztem Wasser verdünnt, in dem zuvor 0,5 Teile Kaliumperoxidisulfat gelöst wurden. Nach Verdrängung der Luft aus der Lösung durch Durchleiten von Stickstoff und Erwärmen auf 65°C werden in 2 getrennten Zuläufen a) 2 Teile des Natriumsalzes der disproportionierten Abietinsäure (gelöst in 25 Teilen Wasser) und b) eine Mischung aus 5,6 Teilen Acrylnitril und 14,4 Teilen Styrol gleichmässig über einen Zeitraum von 4 h zudosiert. Zur Vervollständigung der Reaktion wird nach beendetem Zulauf noch 2 h bei 65°C weitergerührt.

Der so erhaltene Pfropfpolymerisatlatex wird mit 2%iger Magnesiumsulfatlösung koaguliert, das Koagulat abgetrennt, salzfrei gewaschen und bei +70°C im Vakuum getrocknet.

Charakterisierung des Pfropfpolymerisates:
Elastomergehalt: 80%
Styrolgehalt: 14,4%
Acrylnitrilgehalt: 5,6%

Nach der 2-tägigen Lagerung, dem Verspritzen und 15stündigem Tempern bei 110°C zeigte der Thermoplast folgende Eigenschaften:

| Prüfung | Norm | Masseinheit | Werte |
|---|---|---|---|
| Abriebverlust | DIN 53516 | mm³ | 18 |
| Härte Shore D | DIN 53505 | | 61 |
| Grenzbiegespannung | DIN 53452 | MPa | 13 |
| Zugfestigkeit | DIN 53504 | MPa | 39 |
| Bruchdehnung | DIN 53504 | % | 290 |
| Kerbschlagzähigkeit bei −30°C | DIN 53453 | kJ/m² | 18 |
| Erweichungspunkt (TMA) | eigene Norm | °C | 75 |

Dieser Thermoplast weist eine sehr gute Abriebbeständigkeit, gute Kratzfestigkeit (z.B. Skischuh in Kontakt mit einer Stahlkante) und vor allem eine hervorragende Kältekerbschlagzähigkeit bei −30°C auf. Die Wärmestandfestigkeit ist im Vergleich zu reinem TPU oder dem Produkt von Versuch 1b und 1d erheblich besser.

Beispiel 1d (Vergleichsversuch)

Beispiel 1c wird wiederholt, jedoch werden in den Trichter der Zweiwellenschneckenmaschine anstelle von Pfropfkautschuk A 10 Teile der reinen Elastomerkomponente des Pfropfkautschuks A (durch Emulsionspolymerisation erhaltenes Polybutadien) eingegeben.

Die Verarbeitungstemperaturen sind dieselben wie bei Beispiel 1a. Zugabe des Polybutadiens: bei ca. 25°C.

Nach 2tätiger Lagerung des Granulats, dem Verspritzen und 15stündigem Tempern bei 110°C zeigt der Thermoplast folgendes Eigenschaftsbild:

| Prüfung | Norm | Masseinheit | Werte |
|---|---|---|---|
| Abriebverlust | DIN 53516 | mm³ | 60 |
| Härte Shore D | DIN 53505 | – | 58 |
| Grenzbiegespannung | DIN 53452 | MPa | 10 |
| Zugfestigkeit | DIN 53504 | MPa | 29 |
| Bruchdehnung | DIN 53504 | % | 90 |
| Kerbschlagzähigkeit bei −30°C | DIN 53453 | kJ/m² | 3 |
| Erweichungspunkt | eigene Norm | °C | 45 |

Die Festigkeiten und die Kältekerbschlagzähigkeit dieses Produktes sind schlecht.

Beispiel 2a (erfindungsgemäss)
20 Teile Pfropfkautschuk A (siehe Beispiel 1c) werden in den Trichter der Schneckenmaschine dosiert und
32,08 Teile Polycaprolactondiol (OH-Zahl 56)
0,16 Teile Stearylamid
0,16 Teile 2,6-Di-tert.-butyl-4-methylphenol
0,16 Teile 2,2′-6,6′-Tetraisopropyldiphenylcarbodiimid
11,22 Teile Butandiol-1,4 und
36,22 Teile 4,4′-Diphenylmethandiisocyanat
in Gehäuse 2 eingespeist.

Der Thermoplast zeigt nach 2tätiger Lagerung, dem Verspritzen und 15stündigem Tempern bei 110°C folgendes Eigenschaftsbild:

| Prüfung | Norm | Masseinheit | Werte |
|---|---|---|---|
| Abriebverlust | DIN 53516 | mm³ | 22 |
| Härte Shore D | DIN 53505 | – | 60 |
| Grenzbiegespannung | DIN 53452 | MPa | 11 |
| Zugfestigkeit | DIN 53504 | MPa | 36 |
| Bruchdehnung | DIN 53504 | % | 300 |
| Kerbschlagzähigkeit bei −30°C | DIN 53453 | kJ/m² | 27 |

Beispiel 2b (erfindungsgemäss)
In den Trichter der Zweiwellenknetmaschine werden 5 Teile des Pfropfkautschuks A aus Versuch 1c dosiert und in Gehäuse 2
38,09 Teile Polycaprolactondiol (OH-Zahl 56)
0,19 Teile Stearylamid
0,19 Teile 2,6-Di-tert.-butyl-4-methylphenol
0,19 Teile 2,2′-6,6′-Tetraisopropyldiphenylcarbodiimid
13,33 Teile Butandiol-1,4 und
43,01 Teile 4,4′-Diphenylmethandiisocyanat
eingespeist. Die Zugabe- und Verarbeitungstemperaturen sind dieselben wie bei Beispiel 1; der Pfropfkautschuk wird bei ca. 25°C zudosiert.

Es wird ein Thermoplast erhalten, der nach 2tätiger Lagerung, dem Verspritzen und 15stündigem Tempern bei 110°C folgende Eigenschaften aufweist:

| Prüfung | Norm | Masseinheit | Werte |
|---|---|---|---|
| Abriebverlust | DIN 53516 | mm³ | 17 |
| Härte Shore D | DIN 53505 | – | 61 |
| Grenzbiegespannung | DIN 53452 | MPa | 12 |
| Zugfestigkeit | DIN 53504 | MPa | 44 |
| Bruchdehnung | DIN 53504 | % | 350 |
| Kerbschlagzähigkeit bei −30 C | DIN 53453 | kJ/m² | 18 |

Die Kratzfestigkeit und Abriebbeständigkeit sind bei Thermoplast 2b besonders gut und das Stapeln frischer Formkörper ist bei diesem Thermoplasten problemlos möglich.

Beispiel 3 (erfindungsgemäss)
Ein nach der Rezeptur von Beispiel 2a (ohne Pfropfkautschuk A) hergestelltes thermoplastisches Polyurethan (80 Teile Granulat) wird mit 20 Teilen Pfropfkautschuk A in einen Zweiwellenextruder eindosiert. Nach Granulieren, Verspritzen und Tempern werden folgende Prüfwerte gemessen:

| Prüfung | Norm | Masseinheit | Werte |
|---|---|---|---|
| Abriebverlust | DIN 53516 | mm³ | 26 |
| Härte Shore D | DIN 53505 | – | 59 |
| Grenzbiegespannung | DIN 53452 | MPa | 10 |
| Zugfestigkeit | DIN 53504 | MPa | 31 |
| Bruchdehnung | DIN 53504 | % | 260 |
| Kerbschlagzähigkeit bei −30°C | DIN 53453 | kJ/m² | 24 |

Der nach dem Dry-Blend-Verfahren hergestellte Thermoplast weist noch recht gute Eigenschaften auf, liegt aber in den Festigkeiten im Vergleich zu Beispiel 2a etwas niedriger.

**Patentansprüche**

1. Thermoplastisch verarbeitbare Gemische aus Polyurethan und Pfropfpolymeren, bestehend aus

A) 75–97 Gew.-% eines thermoplastischen Polyurethans und

B) 25–3 Gew.-% eines Pfropfpolymerisats ungesättigter Monomerer auf eine kautschukelastische Elastomerkomponente,

dadurch gekennzeichnet, dass Komponente A) ein thermoplastisches lineares Polyurethan mit einer Shore-D-Härte > 50, aus linearen Polyolen mit Molekulargewichten zwischen 800 und 6000, Diisocyanaten und niedermolekularen Polyalkoholen als Kettenverlängerungsmittel in einem Molverhältnis von Kettenverlängerungsmittel zu langkettigem Polyol von > 4 : 1 und einem NCO/OH-Verhältnis von 0,95–1,10, und

Komponente B) ein Pfropf-Copolymerisat von

a) 12,5–25 Gew.-% eines oder mehrerer Pfropfmonomerer auf

b) 75–87,5 Gew.-% einer Elastomerkomponente mit einer Einfriertemperatur < −50°C aus der Gruppe von 1,3-Dien- und Acrylat-Kautschuken ist, wobei die gesamte Komponente B) < 30 Gew.-% an den Monomeren Styrol, α-Methylstyrol und Acrylnitril enthält.

2. Gemische nach Anspruch 1, dadurch gekennzeichnet, dass sie aus 88–96 Gew.-% der Komponente A) und 12–4 Gew.-% der Komponente B) bestehen.

3. Gemische nach Anspruch 1 und 2, dadurch gekennzeichnet, dass man als Komponente A thermoplastische Polyurethane mit einer Shore-D-Härte > 60 verwendet, welche mit Hydrochinon-bis-hydroxäthyläther, Butandiol-1,4 oder Hexandiol-1,6 als Kettenverlängerungsmittel in einem Molverhältnis Kettenverlängerungsmittel/langkettige Polyole von > 6 : 1 hergestellt wurden.

4. Gemische nach Anspruch 1 bis 3, dadurch gekennzeichnet, dass man als

Komponente B) Pfropfpolymerisate mit

a) Styrol, α-Methylstyrol, Acrylnitril, Methacrylnitril, Acrylsäurealkylester und Methacrylsäurealkylester als Pfropfmonomere und

b) als Pfropfgrundlage Elastomerkomponenten aus der Gruppe von 1,3-Dien-polymerisaten aus 100–70 Gew.-% Butadien und/oder Isopren und 0–30 Gew.-% Styrol und/oder Acrylnitril und aus der Gruppe von Copolymerisaten aus Butadien und Acrylsäurealkylestern verwendet.

5. Gemische nach Anspruch 1–4, dadurch gekennzeichnet, dass man Pfropfpolymerisate mit

a) Styrol und Acrylnitril im Gewichtsverhältnis von 9 : 1 bis 1 : 1 als Pfropfmonomere und

b) Polymerisate aus 90–100 Gew.-% Butadien und 0–10 Gew.-% Styrol und/oder Acrylnitril als Pfropfgrundlage verwendet.

6. Verfahren zur Herstellung thermoplastisch verarbeitbarer Gemische nach Anspruch 1–5, dadurch gekennzeichnet, dass die Komponenten A) und B), sowie gegebenenfalls Stabilisatoren und Vernetzungsmittel, koextrudiert werden.

7. Verfahren zur Herstellung thermoplastisch verarbeitbarer Gemische nach Anspruch 1–6, dadurch gekennzeichnet, dass die thermoplastisch verarbeitbaren Gemische durch Polyaddition von Polyurethan-bildenden Ausgangsstoffen der Komponente A) in Gegenwart der Komponente B), sowie gegebenenfalls Stabilisatoren und Vernetzungsmitteln, in einer zweiwelligen Reaktionsschneckenmaschine aufgebaut werden.

**Claims**

1. Thermoplastically processible mixtures of polyurethane and graft polymers, consisting of

A) 75–97% by weight of a thermoplastic polyurethane and

B) 25–3% by weight of a graft polymer of unsaturated monomers on a rubber-elastic elastomer component, characterised in that component A) is a thermoplastic linear polyurethane having a hardness of > 50 Shore D, of linear polyols having molecular weights between 800 and 6,000, diisocyanates and low molecular weight polyalcohols as chainextenders, in a molar ratio of > 4 : 1 of chain extender to long-chain polyol and an NCO/OH ratio of 0.95–1.10, and component B) is a graft copolymer of

a) 12.5–25% by weight of one or more graft monomers on

b) 75–87.5% by weight of an elastomer component, having a second order transition temperature of < −50°C, from the group of 1,3-diene rubbers and acrylate rubbers, the entire component B) containing < 30% by weight of the monomers styrene, α-methyl styrene and acrylonitrile.

2. Mixtures according to Claim 1, characterised in that they consist of 88–96% by weight of component A and 12–4% by weight of component B).

3. Mixtures according to Claim 1 and 2, characterised in that thermoplastic polyurethanes which have a hardness of > 60 Shore D and which have been produced with hydroquinone-bis-hydroxyethyl ether, 1,4-butane diol or 1,6-hexane diol as the chain extender, in a molar ratio of chain extender to long-chain polyols of > 6 : 1, are used as component A).

4. Mixtures according to Claim 1 to 3, characterised in that graft polymers comprising
   a) styrene, α-methyl styrene, acrylonitrile, methacrylonitrile, acrylic acid alkyl esters and methacrylic acid alkyl esters as the graft monomer and
   b) elastomer components from the group of 1,3-diene polymers of 100–70% by weight of butadiene and/or isoprene and 0–30% by weight of styrene and/or acrylonitrile and from the group of copolymers of butadiene and acrylic acid alkyl esters, as the graft base are used as component B).

5. Mixtures according to Claim 1–4, characterised in that graft polymers comprising
   a) styrene and acrylonitrile, in a weight ratio of 9 : 1 to 1 : 1, as the graft monomer and
   b) polymers of 90–100% by weight of butadiene and 0–10% by weight of styrene and/or acrylonitrile as the graft base, are used as the graft polymers.

6. Process for the production of thermoplastically processible mixtures according to Claim 1–5, characterised in that the components A) and B), and, optionally, stabilisers and crosslinking agents are co-extruded.

7. Process for the production of thermoplastically processible mixtures according to Claim 1–6, characterised in that the termoplastically processible mixtures are synthesised by the polyaddition of polyurethane-forming starting materials of component A) in the presence of component B), and optionally stabilisers and crosslinking agents in a twin-screw reaction extruder.

**Revendications**

1. Mélanges aptes aux transformations thermoplastiques de polyuréthanes et de polymères greffés, consistant en
   A) 75–97% en poids d'un polyuréthane thermoplastique, et
   B) 25–3% en poids d'un polymère greffe de monomères insaturés et d'un composant élastomère élastique caoutchouteux, caractérisé en ce que
   le composant A) est un polyuréthane linéaire thermoplastique d'une dureté Shore D > 50 de polyols linéaires de poids moléculaire compris entre 800 et 6 000, de diisocyanates et de polyalcools de bas poids moléculaire comme agents d'allongement de chaînes, dans un rapport molaire des agents d'allongement de chaînes au polyol à longue chaîne > 4 : 1 et d'un rapport NCO/OH de 0,95–1,10, et
   le composant B) est un copolymère greffé de
   a) 12,5–25% en poids d'un ou plusieurs monomères greffés sur
   b) 75–87,5% en poids d'un composant élastomère ayant un point de solidification < – 50 °C, appartenant au groupe de caoutchoucs de 1,3-diènes et d'acrylates,
   le composant B) total contenant < 30% en poids des monomères styrène, α-méthylstyrène et acrylonitrile.

2. Mélanges selon la revendication 1, caractérisés en ce qu'ils consistent en 88–96% en poids du composant A) et 12–4% en poids du composant B).

3. Mélanges selon les revendications 1 et 2, caractérisés en ce que l'on utilise comme composant A) des polyuréthanes thermoplastiques ayant une dureté Shore D > 60, qui ont été préparés avec la diéther d'hydroxyéthyle de l'hydroquinone, le butanediol-1,4 ou l'hexanediol-1,6 comme agent d'allongement du chaînes dans un rapport molaire agent d'allongement de chaînes/polyols à longue chaîne > 6 : 1.

4. Mélanges selon les revendications 1 à 3, caractérisés en ce que l'on utilise comme composant B) des polymères greffés de
   a) styrène, α-méthalstyrène, acrylonitrile, méthacrylonitrile, acrylates d'alkyle et méthacrylates d'alkyle comme monomères greffés, et
   b) comme support de greffage des composants d'élastomères du groupe des polymères de 1,3-diènes de 100–70% en poids de butadiène et/ou d'isoprène, et 0–30% en poids de styrène et/ou d'acrylonitrile et du groupe des copolymères de butadiène et d'acrylates d'alkyle.

5. Mélanges selon les revendications 1 à 4, caractérisés en ce que l'on utilise des polymères greffés de
   a) styrène et acrylonitrile dans le rapport pondéral de 9 : 1 à 1 : 1 comme monomères greffés, et
   b) polymères de 90–100% en poids de butadiène et 0–10% en poids de styrène et/ou d'acrylonitrile comme support de greffage.

6. Procédé pour la préparation de mélanges aptes aux transformations thermoplastiques selon les revendications 1 à 5, caractérisé en ce que l'on extrude ensemble les composants A) et B), ainsi éventuellement que des stabilisants et agents réticulants.

7. Procédé pour la préparation des mélanges aptes aux transformations thermoplastiques selon les revendications 1 à 6, caractérisé en ce que les mélanges aptes aux transformations thermoplastiques sont synthétisés par polyaddition de produits de départ générateurs de polyuréthanes du composant A) en présence du composant B), ainsi éventuellement que de stabilisants et d'agents réticulants, dans un réacteur à deux vis.